(19) Europäisches Patentamt
European Patent Office
Office européen des brevets

(11) EP 1 710 286 A1

(12) EUROPEAN PATENT APPLICATION

(43) Date of publication:
11.10.2006 Bulletin 2006/41

(21) Application number: 05102617.7

(22) Date of filing: 04.04.2005

(51) Int Cl.:
*C09J 7/02* (2006.01) *B32B 3/28* (2006.01)
*B60R 21/00* (2006.01)

(84) Designated Contracting States:
AT BE BG CH CY CZ DE DK EE ES FI FR GB GR HU IE IS IT LI LT LU MC NL PL PT RO SE SI SK TR
Designated Extension States:
AL BA HR LV MK YU

(71) Applicant: 3M Innovative Properties Company
St. Paul,
Minnesota 55144-1000 (US)

(72) Inventors:
- Sikkel, Bernard J.
Hermeslaan 7
1831 Diegem (BE)
- Swan, Michael D.
Hermeslaan 7
1831 Diegem (BE)

(74) Representative: Voortmans, Gilbert J.L. et al
3M Europe S.A.,
Hermeslaan 7
1831 Diegem (BE)

(54) **Reinforcement Pad**

(57) The invention provides a reinforcement pad comprising a non-woven fibrous layer having a thickness of at least 3 mm and having opposite major sides, one of said major sides comprising an adhesive layer, wherein said non-woven fibrous layer comprises a cross-linkable composition. Upon curing of the cross-linkable composition, the non-woven fibrous layer can be stiffened.

EP 1 710 286 A1

## Description

1. Field of the invention

The present invention relates to a reinforcement pad for the reinforcement of a substrate such as for example a metal or plastic panel.

2. Background of the invention

In the automotive industry, reinforcement sheets are frequently applied to panels of plastic or metal or other substrates for localized, lightweight reinforcement. Typically, such reinforcement may be applied to maintain a certain desired shape of a panel or to avoid denting of panels. Examples of reinforcement sheets have been disclosed in US 4,444,818, US 4,766,183, US 4,842,938, US 4,803,105, US 4,803,108, US 4,900,601, US 4,9298,483, US 5,092,947 and WO 01/947493.

Generally, these reinforcement sheets comprise a layer of a stiffening material and a layer of adhesive, typically an epoxy adhesive, to adhere the reinforcement sheet to a substrate that is to be reinforced. Various configurations and structures have been described for the layer of stiffening material of the reinforcement sheet seeking an appropriate balance between flexibility of the reinforcement sheet during its application such that it can conform to the configuration of the substrate to which it is applied as well as to provide a high degree of stiffness and reinforcement.

3. Summary of the invention

It would now be desirable to find a further reinforcement pad that is suitable for the reinforcement of substrates, in particular that is suitable for the reinforcement of panels in the automotive industry. In particular, it would be desirable to find a reinforcement pad that can provide maximum flexibility during application such that it can be easily conformed to the shape of a substrate. It would further be desirable to find a reinforcement sheet that provides good or excellent reinforcement of panels. A further desired feature would be that the pads can be easily manufactured in an economically feasible and cost effective way. Desirably, the pads can be easily applied to a substrate avoiding exposing an operator to chemical compositions of a cure composition or adhesive.

In accordance with one aspect of the present invention, there is provided a reinforcement pad comprising a non-woven fibrous layer having a thickness of at least 3 mm and having opposite major sides, one of said major sides comprising an adhesive layer, wherein said non-woven fibrous layer comprises a cross-linkable composition. Upon curing of the cross-linkable composition, the non-woven fibrous layer can be stiffened.

The reinforcement pad can be used to reinforce substrates and accordingly, the present invention provides in a further aspect, a method of reinforcing a substrate, comprising adhering to said substrate a reinforcement pad as described above and cross-linking said cross-linkable composition.

It has been found that the reinforcement pad according to the invention generally has a high flexibility and can be easily conformed to even complex shapes of a substrate that is to be reinforced. This beneficial feature is generally combined with good to excellent reinforcement properties that can be achieved upon cross-linking of the cross-linkable composition in the non-woven fibrous layer. Further the reinforcement pad can be easily manufactured in an economically feasible way. Also the pads may be designed in such a way as to avoid exposure of the operator applying the pad to the cross-linking composition.

4. Drawings

The invention is described and further illustrated with reference to the following drawings without the intention to limit the invention thereto:

> Figure 1 shows a schematic representation of a cross-section of a reinforcement pad in accordance with one embodiment of he present invention.
> Figure 2 schematically illustrates a vertically cross-lapped non-woven fibrous layer for use with the present invention

5. Detailed description of the invention

The reinforcement pad comprises a non-woven fibrous layer having a thickness of at least 3 mm, typically more than 3 mm. On one of the major sides of the reinforcement pad, the pad comprises an adhesive layer. The pad further has a cross-linkable composition in the non-woven fibrous layer. In accordance with one embodiment, the opposite side of the non-woven fibrous layer does not contain an adhesive layer and preferably the surface of the pad on the side is formed by the non-woven fibrous layer. An example of such an embodiment is shown in figure 1. The reinforcement pad 10 as shown in figure 1 has an adhesive layer 11 on one major side of the non-woven fibrous layer 12. The non-woven fibrous layer further comprises a cross-linkable composition 13. As can be seen from figure 1, the side of the reinforcement pad opposite to the side that contains adhesive layer 11 is free of adhesive.

The non-woven fibrous layer should have a thickness of at least 3 mm. The thickness of the fibrous web is defined as the shortest distance in an uncompressed state between its first and second major surface. Without intending to be bound by any theory, it is believed that the non-woven fibrous web holds the cross-linkable composition contained therein in a three dimensional configuration during handling and application of the reinforcement pad prior to cross-linking the curable composition. Thus, the non-woven fibrous web should have

a thickness sufficient to support such three dimensional configuration. In a typical embodiment of the present invention, the non-woven fibrous layer has a thickness of at least 4 mm, for example at least 5 mm. A practical range may be from 6 to 30 mm.

Generally, the fibrous web has a basis weight ranging from 10 $g/m^2$ to 1 $kg/m^2$. For example, the web may have a basis weight of 50 $g/m^2$ or above, such as 100 $g/m^2$ or above or 150 $g/m^2$ or above. Depending on the application, fibrous webs may also be used having a basis weight of 200 $g/m^2$ or more, such as 250 $g/m^2$ or above, 300 $g/m^2$ or above, 350 $g/m^2$ or above or 400 $g/m^2$ or above.

The type of fibers to be used in the fibrous web may vary widely and include staple fibers. Typical examples are polyolefin fibers such as polyethylene, or polypropylene, polystyrene fibers, polyether fibers, polyester fibers such as polyethylene terephthalate (PET) or polybutaline terephthalate (PBT) fibers, vinyl polymer fibers such as polyvinyl chloride and polyvinylidene fluoride, polyamides such as polycaprolactam, polyurethanes, nylon fibers, polyaramide fibers (such as Kevlar® fibers). Alternatively or in addition, the fibrous web may contain metal fibers, metal coated fibers, fibers coated with other conductive materials or carbon fibers. Preferred examples are PET fibers and polyaramide fibers. Also, blends of two or more of the above types of fibers may be used to provide fibrous webs in the adhesive articles of the invention. The above mentioned fibers may be blended with thermal bond fibers, using amounts of the thermal bond fibers of 10 % by weight or more, such as 15 % by weight, based on the total amount of fibers in the fibrous web. Thermal bond fibers are known in the art, and include bicomponent fibers (also known as Bico fibers). The thermal bond fibers may be used to give further strength to the fibrous web. Generally, 30 % by weight or less or 20 % by weight or less of the thermal bond fibers are sufficient to provide additional integrity to the fibrous web.

Generally, the fibers of the fibrous web have a diameter of at least 1 denier (den). Preferred are values of not less than 5 den, such as 10 den or above or 15 den or above. Preferably, the fibers should have a diameter of not more than 100 den, for example 50 den or less.

According to a particular embodiment for providing a non-woven fibrous webs, vertical lapping or vertical cross lapping (VCL) may be used. Vertical cross lapping yields a corrugated non-woven fibrous web by vertically folding a carded fibrous web. The carded fibrous web in one embodiment may be cross-lapped and then vertically folded. Fig. 2 provides a schematic view of a vertically cross lapped web. This figure also demonstrates that the fibers which are initially oriented in the x, y-direction in the carded web used as a starting product in the VCL process, are oriented towards the z-direction (or the thickness direction) of the fibrous web resulting from the process. Thermal bond fibers may help to stabilize the corrugated structure of the vertically cross lapped web. These thermal bond fibers may be activated after the lapping process, e.g. by passing the web through a thermal bond oven. Suitable techniques of vertical cross lapping are established in the art, and the equipment necessary to obtain a VCL web is available under the trade name "Struto" or "Wavemaker". Such techniques are also disclosed in US 6,602,581 and literature cited therein.

The cross-linkable composition that is contained in the non-woven fibrous layer may be present throughout the whole thickness of the non-woven fibrous layer or may be present along only part of the thickness of the non-woven fibrous layer. In one embodiment, the cross-linkable composition is uniformly distributed throughout part or all of the thickness of the non-woven fibrous web. According to another embodiment, the cross-linkable composition may be comprised in the non-woven fibrous web in a regular or irregular three-dimensional pattern. For example, a cross-hatch pattern of a cross-linkable composition may be obtained by providing a cross-hatch pattern of the cross-linkable composition on one surface of the non-woven fibrous layer and allowing or causing the cross-hatch pattern of the composition to partially or completely penetrate the non-woven fibrous layer. An irregular non-uniform pattern may be created by stretching a VCL fibrous web, providing the web on a tacky or softened layer of a cross-linkable composition. Subsequent folding of the non-woven fibrous web can cause the cross-linkable composition to penetrate in the creases of the non-woven fibrous web thereby forming an irregular three-dimensional configuration of the cross-linkable composition in the non-woven fibrous layer. Depending on the thickness of the layer of cross-linkable composition used, part or all of the cross-linkable composition may be penetrated into the non-woven fibrous layer. If not all of the composition penetrates, the remainder of the layer may form the adhesive layer of the reinforcement pad.

The amount of cross-linkable composition in the fibrous layer may vary widely and will depend on such factors as the nature of the cross-linkable composition used, the desired degree of stiffening and the way the cross-linkable composition is distributed in the fibrous layer or the configuration of the cross-linkable composition in the non-woven fibrous layer. According to a particular embodiment of the present invention, the amount of cross-linkable composition may be from 5 to 200 % by weight based on the weight of fibers, for example from 10 to 150% or from 30 to 100% by weight.

The cross-linkable composition is typically a thermoplastic composition that is solid at ambient temperature (25°C) and can generally be softened or melted upon heating without causing premature cross-linking. The cross-linking composition may be one that can be cross-linked upon activation by heat, actinic radiation or electron beam irradiation. The cross-linkable composition may be an epoxy based composition but other cross-linkable compositions are not excluded. In a particular

embodiment in connection with the present invention, the cross-linkable composition comprises a cross-linkable adhesive composition such as for example a thermosetting composition as described below.

The adhesive layer of the reinforcement pad generally is engaged with fibers of the non-woven fibrous web although in a particular embodiment an intermediate layer of for example a cross-linkable composition may be present. Generally, the adhesive layer should, along its thickness, not be completed penetrated or immersed with fibers of the non-woven fibrous composition as such may negatively impact the capability of providing good adherence to a substrate. According to a particular embodiment, the thickness of the part of the adhesive layer that is not penetrated with fibers of the non-woven fibrous web is between 0 and 95%, for example between 20 and 60%.

The adhesive layer of the reinforcement pad may comprise a pressure sensitive adhesive as well as an activatable adhesive including a cross-linkable adhesive and heat activatable or hot melt adhesive. Further, the adhesive layer may comprise a mixture of pressure sensitive adhesive and activatable adhesive or an activatable adhesive having pressure sensitive adhesive characteristics can be used as well. In a particular embodiment in connection with the present invention, the adhesive layer may comprise separate domains of a pressure sensitive adhesive and an activatable adhesive composition. These domains should generally be arranged such that they together define the adhesive surface.

The term 'activatable adhesive composition', as it is used in the context of the present invention, refers to an adhesive composition that requires activation to form a bond, in particular a permanent bond. By 'activation' is meant that the adhesive composition is exposed to heat or is irradiated with, for example UV, visible light or e-beam to cause the bond to form. In one embodiment, a structural bond may be formed that has a shear strength of at least 0.2 MPa, for example at least 2 MPa, typically at least 6.9 MPa measured according to ASTM D-1002-94. The structural bond preferably has a T- peel strength of at least 50N/25mm, more preferably at least 100N/25mm when tested according to the methods outlined under ASTM D1876. The activatable adhesive composition may or may not have pressure sensitive adhesive properties, and, when present, these may not be retained through a typical activation cycle used in forming a permanent or structural bond. Exemplary activatable adhesive composition having pressure sensitive properties which may also be used for the adhesive articles of the present invention are disclosed in US 5,086,088 and in WO 92/20754.

Upon activation, an activatable adhesive composition may cross-link or cure, i.e. a so-called thermosetting adhesive, or the adhesive composition may melt, thereby wetting out the surface and forming a bond upon cooling. Still further, the activatable adhesive composition may be comprised of a so-called hybrid material as defined below.

The term "thermosetting" as used herein refers to a material, which undergoes a curing reaction that results in a chemical change upon bonding and an increase in the hardness of the material. The term "thermoset" as used herein refers to a thermosetting material, which has been cured. A thermosetting material may generally be bonded by application of heat, actinic radiation such as UV, visible, or infrared, or microwave or X-ray energy.

The term "thermoplastic" as used herein refers to a material which undergoes a physical change upon the application of heat, i.e., the material flows upon bonding and returns to its initial non-flowing state upon cooling. A thermoplastic material is typically bonded by application of heat.

The term "hybrid material" refers to a material which is a combination of at least two components, wherein the at least two components are compatible in the melt phase (the melt phase is where the combination of the at least two components is a liquid), the at least two components form an interpenetrating polymer network or semi-interpenetrating polymer network, and at least one component becomes infusible (i.e., the component cannot be dissolved or melted) after application of heat or by other means of curing such as application of light. A hybrid material will be described in more detail below. A hybrid material may generally be bonded by application of heat, actinic radiation such as UV, visible, or infrared, or microwave or X-ray energy.

A hybrid material is, for the purpose of the present invention, mutually exclusive of the classes of thermosetting and thermoplastic materials defined herein. In other words, thermosetting materials and any optional additives or thermoplastic materials and any optional additives will be considered non-hybrid materials if they do not meet the definition of hybrid material as defined herein.

Exemplary activatable compositions for use in the present invention are those referred to as adhesive material in US 2002/0182955 A1, the curable compositions of US 6,057,382 or those listed in the following

Suitable thermosetting materials include epoxides, urethanes, cyanate esters, bismaleimides, phenolics, including nitrile phenolics, and any combinations thereof.

Suitable epoxides include those containing at least two 1,2-cyclic ethers. Such compounds can be saturated or unsaturated, aliphatic, aromatic or heterocyclic, or can comprise combinations thereof. Suitable epoxides may be solid or liquid at room temperature.

Compounds containing at least two epoxide groups (i.e., polyepoxides) are preferred. A combination of epoxide compounds may be employed, and an epoxide having a functionality of less than two may be used in a combination so long as the overall epoxide functionality of the mixture is at least two. The polymeric epoxides include linear polymers having terminal epoxy groups

(e.g., a diglycidyl ether of a polyoxyalkylene glycol), polymers having skeletal oxirane units (e.g., polybutadiene polyepoxide), and polymers having pendent epoxy groups (e.g., a glycidyl methacrylate polymer or copolymer). It is also within the scope of this invention to use a material with functionality in addition to epoxide functionality but which is essentially unreactive with the epoxide functionality, for example, a material containing both epoxide and acrylic functionality.

A wide variety of commercial epoxides are available and listed in "Handbook of Epoxy Resins" by Lee and Neville, McGraw Hill Book Company, New York (1967) and in "Epoxy Resin Technology" by P. F. Bruins, John Wiley & Sons, New York (1968), and in "Epoxy Resins: Chemistry and Technology, 2nd Edition" by C. A. May, Ed., Marcel Dekker, Inc. New York (1988). Aromatic polyepoxides (i.e., compounds containing at least one aromatic ring structure, e.g., a benzene ring, and at least two epoxide groups) that can be used in the present invention include the polyglycidyl ethers of polyhydric phenols, such as Bisphenol A-or Bisphenol-F type resins and their derivatives, aromatic polyglycidyl amines (e.g., polyglycidyl amines of benzenamines, benzene diamines, naphthylenamines, or naphthylene diamines), polyglycidyl ethers of phenol formaldehyde resole or novolak resins; resorcinol diglycidyl ether; polyglycidyl derivatives of fluorene-type resins; and glycidyl esters of aromatic carboxylic acids, e.g., phthalic acid diglycidyl ester, isophthalic acid diglycidyl ester, trimellitic acid triglycidyl ester, and pyromellitic acid tetraglycidyl ester, and mixtures thereof. Preferred aromatic polyepoxides are the polyglycidyl ethers of polyhydric phenols, such as the series of diglycidyl ethers of Bisphenol-A commercially available from Shell Chemical Inc., Houston, Tex., for example, under the trade designations "EPON 828" and "EPON 1001 F" and the series of diglycidyl ethers of Bisphenol-A and Bisphenol F and their blends commercially available from Shell Chemical Inc., for example, under the trade designations "Epikote 232" and "Epikote 1001" available from Shell Chemical Inc., Pernis, The Netherlands. Other useful commercially available aromatic epoxides include the "DER" series of Bisphenol epoxides, and "DEN" series of epoxy novolak resins available from Dow Chemical, Midland, Mich., diglycidyl ether of fluorene Bisphenol, available from Shell Chemical Inc., Houston, Tex., under the trade designation "EPON HPT Resin 1079", a triglycidyl derivative of p-aminophenol commercially available from Ciba Performance Polymers, Brewster, N.Y. under the trade designation "MY 0500", a tetraglycidyl derivative of methylene dianiline commercially available from Ciba Performance Polymers, Brewster, N.Y. under the trade designation "MY 720". Flame retardant epoxides may also be used, for example, the flame retardant brominated Bisphenol-A diglycidyl ether commercially available from Dow Chemical, Midland, Mich., under the trade designation "DER 580". The term "derivative" as used herein with reference to thermosetting materials refers to a base molecule with additional substituents that do not interfere with the thermosetting bonding of the base molecule.

Representative aliphatic cyclic polyepoxides (i.e., cyclic compounds containing one or more saturated carbocyclic rings and at least two epoxide groups, also known as alicyclic compounds) useful in the present invention include the series of alicyclic epoxides commercially available from Union Carbide Corp., Danbury, Conn., under the trade designation "ERL", such as vinyl cyclohexene dioxide ("ERL-4206"), 3,4-epoxycyclohexylmethyl-3,4-epoxycyclohexane carboxylate ("ERL-4221 "), 3,4-epoxy-6-methylcyclohexyhnethyl-3,4-epoxy-6-methylcyclohexane carboxylate ("ERL-4201"), bis (3,4- epoxy- 6- methylcycylohexylmethyl) adipate ("ERL-4289"), and dipentenedioxide ("ERL-4269").

Representative aliphatic polyepoxides (i.e., compounds containing no carbocyclic rings and at least two epoxide groups) include 1,4-bis(2,3-epoxypropoxy) butane, polyglycidyl ethers of aliphatic polyols such as glycerol, polypropylene glycol, 1,4-butanediol, and the like, the diglycidyl ester of linoleic acid dimer, epoxidized polybutadiene (for example, those available under the trade designation "OXIRON 2001" from FMC Corp., Philadelphia, Pa. or "Poly bd" from Elf Atochem, Philadelphia, Pa.), epoxidized aliphatic polyurethanes, and epoxy silicones, e.g., dimethylsiloxanes having cycloaliphatic epoxide or glycidyl ether groups.

Examples of suitable epoxide-based bondable layers that are commercially available in film form include those available from Minnesota Mining and Manufacturing Company ("3M"), St. Paul, Minn. under the trade designation "3M Scotch-Weld Structural Adhesive Film" including those having the following "AF" designations: "AF 42", "AF 111 ", "AF 126-2", "AF 163-2", "AF 3109-2", "AF 191 ", "AF 2635", "AF 3002", "AF 3024", and "AF 3030FST".

In one embodiment, a thermosetting activatable adhesive comprises a fusible epoxide prepolymer (which can melt and flow unlike a B stage resin) which is a solid at room temperature and, more preferably, further comprises a second epoxide component which may be solid or liquid at room temperature. Suitable solid fusible epoxide prepolymers include those described above which are a solid at room temperature.

An exemplary activatable adhesive composition may comprise a solid fusible epoxide prepolymer comprising a diglycidyl ether of Bisphenol A alone or in combination with a diglycidyl ether of Bisphenol A or Bisphenol F or a blend thereof. The activatable adhesive composition is a solid at room temperature after the addition of any optional components, more preferably the epoxide material (comprising single or multiple epoxides) is a solid at room temperature.

The term "urethane materials" as used herein applies to polymers made from the reaction product of a compound containing at least two isocyanate groups (-N=C=O), referred to herein as "isocyanates", and a compound containing at least two active-hydrogen containing

groups. Examples of active-hydrogen containing groups include primary alcohols, secondary alcohols, phenols and water; and primary and secondary amines (which react with the isocyanate to form a urea linkage). A wide variety of isocyanate-terminated materials and appropriate co-reactants are well known, and many are commercially available (see for example, Gunter Oertel, "Polyurethane Handbook", Hanser Publishers, Munich (1985)).

In order to prepare storage-stable compositions based on urethane materials it is preferable to use either an isocyanate or an active hydrogen-containing compound that is blocked. The term "blocked" as used herein refers to a compound that has been reacted with a second compound (i.e. "blocking group") such that its reactive functionality is not available until such time as the blocking group is removed, for example by heating, or by further reaction, such as with water. Examples of blocked isocyanates include those that have been co-reacted with phenol, methyl ethyl ketoxime, and epsilon-caprolactam. Examples of blocked active-hydrogen containing compounds include aldehyde or ketone blocked amines (known as ketimines); aldehyde blocked aminoalcohol (known as oxazolidines); and amines that have been complexed with a salt such as sodium chloride.

When blocked isocyanates are used, examples of suitable co-reactants include polyether polyols such as poly(oxypropylene) glycols, ethylene oxide capped poly(oxypropylene) glycols, and poly(oxytetramethylene) glycols; diamino poly(oxypropylene) glycols; aromatic amine terminated poly(propylene ether) glycols; styrene-acrylonitrile graft polyols; poly(oxyethylene) polyols; polyester polyols such as polyglycol adipates, polyethylene terephthalate polyols, and polycaprolactone polyols; polybutadiene polyols, hydrogenated polybutadiene polyols, polythioether polyols, silicone carbinol polyols, polybutylene oxide polyols, acrylic polyols, carboxy-functional polypropylene oxide polyols, carboxy functional polyester polyols; and aromatic amine-terminated poly(tetrahydrofuran). Suitable urethane resins include blocked urethanes such as that available under the trade designation "Adeka Resin QR-9276" from Asahi Denka Kogyo K. K. Tokyo, Japan, and urethane modified epoxides such as that available under the trade designation "Rutapox VE 2306" from Rutgers Bakelite GmbH, Duisburg, Germany.

Suitable cyanate ester materials (monomers and oligomers) are those having two or more - OCN functional groups, including those described in U.S. Pat. No. 5,143,785, incorporated herein by reference. Examples of suitable cyanate ester compounds include the following: 1,3-and 1,4-dicyanatobenzene; 2-tert-butyl-1,4-dicyanatobenzene; 2,4-dimethyl-1,3-dicyanatobenzene; 2,5-di-tert-butyl-1,4-dicyanatobenzene; tetramethyl-1,4-dicyanatobenzene, 4-chloro- 1,3-dicyanatobenzene; 1,3,5-tricyanatobenzene; 2,2, -or 4,4, -dicyanatobiphenyl; 3,3', 5,5',-tetramethyl-4,4',-dicyanatobiphenyl; 1,3-, 1,4-, 1,5-, 1,6-, 1,8-, 2,6-, or 2,7-dicyanatonaphthalene; 1,3,6-tricyanatonaphthalene; bis(4-cyanatophenyl) methane; bis(3-chloro-4-cyanatophenyl)methane; bis (3,5-dimethyl-4-cyanatophenyl)methane; 1,1-bis(4-cyanatophenyl)ethane; 2,2-bis(4-cyanatophenyl)propane; 2,2-bis(3,5-dibromo-4-cyanatophenyl)propane; 2,2-bis (4-cyanatophenyl)-1,1,1,3,3,3-hexaftuoropropane; bis (4-cyanatophenyl)ether; bis(4-cyanatophenoxyphenoxy)benzene; bis(4-cyanatophenyl)ketone; bis(4-cyanatophenyl)thioether; bis(4-cyanatophenyl)sulfone; tris (4-cyanatophenyl)phosphite; and tris(4-cyanatophenyl) phosphate. Polycyanate compounds obtained by reacting a phenolformaldehyde precondensate with a halogenated cyanide are also suitable.

Other suitable materials include cyanic acid esters derived from phenolic resins as described in U.S Pat. No. 3,962,184, cyanated novolac resins derived from novolac resins as described in U.S. Pat. No. 4,022,755, cyanated bisphenol-type polycarbonate oligomers derived from bisphenol-type polycarbonate oligomers as described in U.S. Pat. No. 4,026,913, cyanato-terminated polyarylene ethers as described in U.S. Pat. No. 3,595,900, dicyanate esters free of ortho hydrogen atoms as described in U.S. Pat. No. 4,740,584, mixtures of di- and tricyanates as described in U.S. Pat. No. 4,709,008, polyaromatic cyanates containing polycyclic aliphatics as described in U.S. Pat. No. 4,528,366, fluorocarbon cyanates as described in U.S. Pat. No. 3,733,349, and other cyanate compositions as described in U.S. Pat. Nos. 4,195,132 and 4,116,946, all of which are incorporated herein by reference. An exemplary commercially available material is a cyanate ester available from Ciba Performance Polymers, Brewster, N.Y. under the trade designation "Quatrex 7187".

Suitable phenolic resins are generally described in Encyclopedia of Polymer Science and Engineering, Volume 11, John Wiley & Sons, Inc. (New York, 1988), pp. 45-92. Phenolic-based resins are generally described in Alphonsus V. Pocius, Adhesion and Adhesives Technology: An Introduction, Hanser Publishers (New York, 1997), pp.185-188. Preferred phenolic resins that can be used to impregnate a sheet which is suitable to prepare hot press laminated products from wood veneers are discussed in U.S. Pat. No. 1,960,176, incorporated herein by reference. Suitable phenolic materials are those made as the reaction product of phenols and formaldehydes, including resole phenolics and novolac phenolics. Examples of phenols include phenol, resorcinol, para-substituted phenol, cresol, and the reaction product of bisphenol A and the monoglycidyl ether of bisphenol A. Exemplary phenolic-based bondable layers include tissue paper impregnated with a thermosetting phenolic resin at a ratio of approximately two parts resin to one part tissue paper commercially available under the trade designation "Phenolic Glue Film" from Dyno Overlays Inc., High Point, N.C.

Resole phenolic resins are characterized by being alkaline catalyzed and having a molar ratio of formaldehyde to phenol of greater than or equal to 1:1. Typically, the ratio of formaldehyde to phenol is within a range of about 1:1 to about 3:1. Examples of suitable alkaline catalysts for preparing resole phenolic resins include sodium hydroxide, potassium hydroxide, organic amines, or sodium carbonate.

Novolac phenolic resins are characterized by being acid catalyzed and having a molar ratio of formaldehyde to phenol of less than 1:1. Typically, the ratio of formaldehyde to phenol is within a range of about 0.4:1 to about 0.9:1. Examples of the acid catalysts used to prepare novolac phenolic resins include sulfuric, hydrochloric, phosphoric, oxalic, or p-toluenesulfonic acids. Although novolac phenolic resins are typically considered to be thermoplastic resins rather than thermosetting resins, they can react with other chemicals (e.g., hexamethylenetetraamine) to form a thermoset resin.
Examples of useful commercially available resole or novolac phenolic resins include "Varcum" from BTL Specialty Resins Corporation, Blue Island, Ill.; "Arofene" from Ashland Chemical Company, Columbus, Ohio; "Bakelite" from Union Carbide, Danbury, Conn.; and "Resinox" from Monsanto Chemical Company, St. Louis, Mo.

Suitable nitrile phenolic materials include those made by including butadiene-nitrile elastomers in novolac phenolic resin-based materials. Examples of suitable nitrile phenolic based bondable layers that are commercially available in film form include those available from Minnesota Mining and Manufacturing Company ("3M"), St. Paul, Minn. under the trade designation "3M Scotch-Weld Structural Adhesive Film" and having the following "AF" designations: "AF 10", "AF 30", "AF 31" and "AF 32".

Examples of suitable bismaleimide materials, also known as N,N-bismaleimide monomers and prepolymers, include the N,N'-bismaleimides of 1,2-ethanediamine, 1,6-hexanediamine, trimethyl-1,6-hexanediamine, 1,4-benzenediamine, 4,4'-methylene-bis(benzenamine), 2-methyl-1,4-benzenediamine, 3,3'-methylene-bis(benzenamine), 3,3'-sulfonyl-bis(benzenamine), 4,4'-sulfonyl-bis(benzenamine), 3,3'-oxy-bis(benzenamine), 4,4'-oxy-bis(benzenamine), 4,4'-methylene-bis(cyclohexanamine), 1,3-benzenedimethanamine, 1,4-benzenedimethanamine, and 4,4'-cyclohexane-bis (benzenamine) and mixtures thereof; Other N,N'-bismaleimides and their process of preparation are described in U.S. Pat. Nos. 3,562,223; 3,627,780; 3,839,358; and 4,468,497, all of which are incorporated herein by reference. Representative examples of commercially available bismaleimide materials include the series of materials available from Shell Chemical, Houston, Tex. under the trade designation "COMPIMIDE" such as 4,4'-bismaleimidodiphenyl methane ("COMPIMIDE Resin MDAB"), and 2,4'-bismaleimidotoluene ("COMPIMIDE Resin TDAB"), and from Dexter/Quantum, San Diego, Calif. under the trade designation "Q-Bond".

A thermosetting composition typically comprises a thermosetting material and a curative or curatives. The term "curative" is used broadly to include not only those materials that are conventionally regarded as curatives but also those materials that catalyze or accelerate the reaction of the curable material as well as those materials that may act as both curative and catalyst or accelerator. It is also possible to use two or more curatives in combination.

Preferred heat activated curatives for use in the present invention exhibit latent thermal reactivity; that is, they react primarily at higher temperatures (preferably at a temperature of at least 80° C.), or react at lower temperatures only after an activation step such as exposure to actinic radiation. This allows the adhesive composition to be readily mixed and coated at room temperature (about 23 $\pm$ 3° C.) or with gentle warming without activating the curative (i.e., at a temperature that is less than the reaction temperature for the curative). One skilled in the art would readily understand which curatives are appropriate for each class of thermosetting materials.

Suitable curatives for epoxide polymerization include polybasic acids and their anhydrides; nitrogen-containing curatives; chloro-, bromo-, and fluoro-containing Lewis acids of aluminum, boron, antimony, and titanium; photochemically activated generators of protic or Lewis acids; and phenolic materials as described above. Exemplary polybasic acids and their anhydrides include di-, tri-, and higher carboxylic acids such as oxalic acid, phthalic acid, terephthalic acid, succinic acid, alkyl substituted succinic acids, tartaric acid, phthalic anhydride, succinic anhydride, malic anhydride, nadic anhydride, pyromellitic anhydride; and polymerized acids, for example, those containing at least 10 carbon atoms, such as dodecendioic acid, 10,12-eicosadiendioic acid, and the like.

Nitrogen-containing curatives include, for example, dicyandiamide, imidazoles (e.g. hexakis(imidazole) nickel phthalate), imidazolates, dihydrazides (e.g. adipic dihydrazide and isophthalic dihydrazide), ureas, and melamines, as well as encapsulated aliphatic amines (e.g., diethylenetriamine, triethylenetetraamine, cyclohexylamine, triethanolamine, piperidine, tetramethylpiperamine, N,N-dibutyl-1,3-propane diamine, N,N-diethyl-1,3-propane diamine, 1,2-diamino-2-methyl-propane, 2,3-diamino-2-methyl-butane, 2,3-diamino-2-methyl-pentane, 2,4-diamino-2,6-dimethyl-octane, dibutylamine, and dioctylamine). The term "encapsulated" as used herein means that the amine is surrounded by a material that prevents it from acting as a curative until the application of heat. Polymer bound amines or imidazoles may also be used. Pyridine, benzylamine, benzyldimethylamine, and diethylaniline are also useful as heat activated curatives.

Examples of nitrogen-containing curatives include those commercially available from Air Products, Allentown, Pa., under the trade designations, "Amicure CG-1200", "AMICURE CG-1400", "Ancamine 2337", "Ancamine 2441", "Ancamine 2014"; and those from Asahi Denka Kogyo K. K. Tokyo, Japan, under the trade

designations "Ancamine 4338S" and "Ancamine 4339S"; those from CVC Specialty Chemicals, Mapleshade, N.J., under the trade designations "Omicure U-52" and "Omicure U-410" as well as the other materials in the "Omicure" series; those from Landec, Menlo Park, Calif., under the trade designations "Intellimer 7001", "Intellimer 7002", "Intellimer 7004", and "Intellimer 7024"; those from Shikoku Fine Chemicals, Japan, and sold by Air Products, as the series of materials available under the trade designation "Curezol"; and those from Ajinomoto Company Inc., Teaneck, N.J., as the series of materials available under the trade designation "Ajicure".

Exemplary chloro-, bromo-, and fluoro-containing Lewis acids of aluminum, boron, antimony, and titanium include aluminum trichloride, aluminum tribromide, boron trifluoride, antimony pentafluoride, titanium tetrafluoride, and the like. Preferably, these Lewis acids may be blocked to increase the latency of the thermosetting material. Representative blocked Lewis acids include $BF_3$ -monoethylamine, and the adducts of $HSbF_5$ X, in which X is halogen, --OH, or --$OR^1$ in which $R^1$ is the residue of an aliphatic or aromatic alcohol, aniline, or a derivative thereof, as described in U.S. Pat. No. 4,503,211, incorporated herein by reference.

Suitable photochemically activated curatives for epoxide polymerization include cationic photocatalysts that generate an acid to catalyze polymerization. It should be understood that the term "acid" can include either protic or Lewis acids. These cationic photocatalysts can include a metallocene salt having an onium cation and a halogen containing complex anion of a metal or metalloid. Other useful cationic photocatalysts include a metallocene salt having an organometallic complex cation and a halogen-containing complex anion of a metal or metalloid which are further described in U.S. Pat. No. 4,751,138 (e.g., column 6, line 65 to column 9, line 45). Other examples of useful photocatalysts include organometallic salts and onium salts, for example, those described in U.S. Pat. No. 4,985,340 (e.g., col. 4, line 65 to col. 14, line 50) and in European Patent Applications 306,161 and 306,162. Still other cationic photocatalysts include an ionic salt of an organometallic complex in which the metal is selected from the elements of Periodic Group IVB, V13, VIB, V1113 and VIIIB which is described in European Patent Application 109,581. A suitable photochemically activated curative is a curative commercially available from Ciba-Geigy, Hawthorne, N.Y. under the trade designation "Irgacure 261".

Suitable curatives for urethane materials include the nitrogen-containing curatives as described for use with epoxides (which can react with a blocked isocyanate group after the deblocking reaction to give a urea) as well as, for example, materials containing hydroxyl (e.g., phenols) or thiol functionality that can react with the deblocked isocyanate. Photochemically activated generators of protic or Lewis acids can be used to enhance these reactions.

Suitable curatives for cyanate ester materials include the nitrogen-containing curatives as described for use with epoxides as well as curatives that may be thermally or photochemically activated. Examples of such curatives include organometallic compounds containing a cyclopentadienyl group ($C_5 H_5$) and derivatives of a cyclopentadienyl group. Suitable curatives include cyclopentadienyl iron dicarbonyl dimer ($[C_5 H_5 Fe (CO)_2 ]_2$), pentamethylcyclopentadienyl iron dicarbonyl dimer ($[C_5 (CH_3)_5 Fe(CO)_2 ]_2$), methylcyclopentadienyl manganese tricarbonyl ($C_5 H_4 (CH_3)Mn(CO)_3$), cyclopentadienyl manganese tricarbonyl ($C_5H_5 Mn(CO)_3$), all of which are available from Strem Chemical Company, Newburyport, Mass. Other suitable curatives include the hexafluorophosphate salt of the cyclopentadienyl iron mesitylene cation ($C_5 H_5$ (mesitylene)$Fe^+ PF_6^-$), and the trifluoromethanesulfonate salt of the cyclopentadienyl iron mesitylene cation ($C_5 H_5$ (mesitylene)$Fe^+ (CF_3 SO_3^-)$), both of which may be prepared by methods described in U.S. Pat. No. 4,868,288 which is incorporated herein by reference.

Suitable curatives for phenolic materials and for nitrile phenolic materials include hexamethylene tetraamine (a latent source of formaldehyde) as well as combinations of organic acids (e.g. phosphoric acid, para toluene sulfonic acid, and salicylic acid) and metallic oxides (e.g. zinc oxide and magnesium oxide).

Suitable curatives for bismaleimide materials include the nitrogen containing curatives as described for use with epoxides as well as latent sources of allyl phenol.

In an alternative embodiment, the activatable adhesive composition may be based on a thermoplastic material. Suitable thermoplastic materials include, for example, polyesters, ethylene vinyl acetate (EVA), polyurethanes, polyamides, polyolefins, and derivatives thereof. The term "derivative" as used herein with reference to thermoplastic materials refers to a base molecule with additional substituents that are not reactive towards a crosslinking or polymerization reaction. Thermoplastic materials, by nature, typically do not require curatives.

A hybrid material, as a further embodiment of the activatable adhesive composition, is a combination of at least two components wherein the at least two components are compatible in the melt phase (the melt phase is where the combination of the at least two components is a liquid), the at least two components form an interpenetrating polymer network or semi-interpenetrating polymer network, and at least one component becomes infusible (i.e., the component cannot be dissolved or melted) after application of heat or by other means of curing such as application of light. A first component is a crosslinkable material and a second component is (a) a thermoplastic material, (b) monomers, oligomers, or polymers (and any required curative) which can form a thermoplastic material, (c) a thermosetting material, i.e., monomers, oligomers, or prepolymers (and any required curative) which can form a thermosetting material. The second component is chosen so that it is not reactive

with the first component. It may be desirable, however, to add a third component which may be reactive with either or both of the crosslinkable material and second component for the purpose of, for example, increasing the cohesive strength of the bonded hybrid material.

Suitable first components include thermosetting materials, for example, the thermosetting materials described above, as well as crosslinkable elastomers such as acrylics and urethanes as described above.

Suitable thermoplastic second components include those thermoplastic materials described above. Suitable thermoplastics which can be formed in situ, i.e., with monomers, oligomers, or polymers (and any required curative) which can form a thermoplastic material without undergoing any significant crosslinking reaction would be readily apparent to one skilled in the art. Exemplary hybrid materials incorporating a second component (a) are described, for example, in PCT/EP98/06323; U.S. Pat. No. 5,709,948, and U.S. Ser. No. 09/070,971, all of which are incorporated herein by reference. Exemplary hybrid materials incorporating a second component (b) are described, for example, in U.S. Pat. No. 5,086,088, which is incorporated herein by reference. Example 1 of U.S. Pat. No. 5,086,088 illustrates an example of a thermoplastic material formed in situ.

Suitable thermosetting second components include those thermosetting materials described above. Exemplary hybrid materials incorporating a second component (c) are described, for example, in U.S. Pat. No. 5,494,981, which are incorporated herein by reference.

A particularly preferred activatable adhesive composition is an epoxy based composition as disclosed in US 6,506,494. Thus, in this embodiment, the activatable adhesive composition comprises:

A) an epoxy resin capable of being cured to a cured epoxy resin when exposed to an activated latent curative system;

B) a latent curative system in an amount sufficient to cure said epoxy resin, comprising (a) at least one epoxy resin miscible first curative comprising a latent hardener, selected from dicyandiamide and its derivatives, contained substantially as a core within a multiplicity of ambient-temperature-stable, impermeable microcapsules having capsule walls comprised of a thermoplastic polymeric material and (b) at least one epoxy resin latent second curative comprising a latent accelerator which is a metal imidazolate compound. The metal imidazolate may be a compound of the formula:

$$ML_m$$

wherein M is a metal selected from the group of Ag (I), Cu(I), Cu(II), Cd(II), Zn(II), Hg(II), Ni(II) and Co(II), L is an imidazolate of the formula:

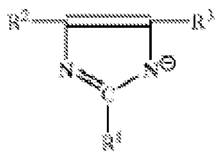

wherein $R^1$, $R^2$, and $R^3$ are selected from a hydrogen atom, an alkyl radical typically having 1 to 10, preferably 1 to 6 carbon atoms or an aryl radical typically having 6 to 18, preferably 6 to 12 carbon atoms and m is the valence of M, in an amount sufficient when activated to cure said epoxy resin admixed uniformly within said curable epoxy resin, wherein the microcapsule walls isolate the first curative from the second curative.

The exemplary activatable adhesive compositions referred to above may be used singly or in combinations of two or more compatible representatives thereof in the adhesive layer of the reinforcement pad.

The reinforcement pad may alternatively or additionally have a pressure sensitive adhesive in the adhesive layer. In a particular embodiment, the pressure sensitive adhesive is an acrylic based pressure sensitive adhesive, but other pressure sensitive adhesives are contemplated as well and may be used. Such other pressure sensitive adhesives include for example those based on silicones or based on polyolefins as disclosed in Handbook of Pressure Sensitive Adhesive Technology (third edition) D. Satas, Ed. Satas and Associates, Warwick RI/USA, 1989 on pages 550-556 and 423-442 respectively.

Particular examples of suitable pressure sensitive adhesives include, but are not limited to, adhesives based on general compositions of poly(meth)acrylate; polyvinyl ether; diene rubber such as natural rubber, polyisoprene, and polybutadiene; polyisobutylene; polychloroprene; butyl rubber;butadiene-acrylonitrile polymer; thermoplastic elastomer; block copolymers such as styrene-isoprene and styrene-isoprene-styrene (SIS) block copolymers, ethylenepropylene-diene polymers, and styrene-butadiene polymers; poly-alpha-olefin; amorphous polyolefin; silicone; ethylene-containing copolymer such as ethylene vinyl acetate, ethylacrylate, and ethyl methacrylate; polyurethane; polyamide; epoxy; polyvinylpyrrolidone and vinylpyrrolidone copolymers; polyesters; and mixtures or blends of the above. The pressure sensitive adhesive composition may contain additives including, but not limited to, tackifiers, plasticizers, fillers, antioxidants, stabilizers, pigments, diffusing materials, curatives, fibers, filaments, and solvents.

Pressure sensitive adhesives that may be used to preliminarily bond to substrates having a low surface energy or oily surfaces, include for example pressure sensitive adhesives based on an acrylic copolymer of one or more alkyl esters of acrylic or methacrylic acid and a vinyl ester as disclosed in for example EP 1 318 181 or a pressure sensitive adhesive as disclosed in EP 1 245 656 which discloses a pressure sensitive adhesive

composition that contains (i) the reaction product obtainable from a precusor composition comprising one or more alkyl esters of acrylic or methacrylic acid, one or more copolymerizable monomers that have a Lewis base functionality and optionally one or more cross-linkers and (ii) one or more tackifying resins. Still further pressure sensitive adhesive that may be particularly useful for adhesion to an oily surface are disclosed in WO 95/13331.

Suitable commercially available pressure sensitive adhesives include those commercially available from 3M Company under the designation VHB.

The reinforcement pad may be used to reinforce substrates. In accordance with the method for reinforcement, the pad is applied and bonded to the substrate that is desired to be reinforced and the cross-linkable composition is simultaneously or subsequent to the bonding caused to cross-link. Depending on the nature of the cross-linkable composition, such crosslinking may be caused by heating if the composition is a thermosetting composition or may be caused by irradiating the cross-linkable composition with light or electron beam radiation if the composition is a photocross-linkable composition or an e-beam curable composition. Generally, a thermosetting composition will be used. Typically curing or cross-linking of a thermosetting composition is caused by heating the reinforcement pad to a temperature of 50 to 300°C. If the adhesive layer of the reinforcement does not have adequate pressure sensitive adhesive characteristics at elevated temperature or if the adhesive layer does not include a pressure sensitive adhesive with adequate holding power at elevated temperature, it may be necessary to provide clamps or similar holding means for holding the reinforcement pad in place during curing of the cross-linkable composition.

In one embodiment according to the present invention, the substrate for reinforcement in the reinforcement method may be a panel of for example metal or plastic, in particular an exterior body panel of a vehicle, in particular a motor vehicle such as a car, truck or bus. Frequently, reinforcement pads that are used to reinforce panels of a motor vehicle are applied to such panels before painting of the panel, that is they are applied to a so-called body in white. Such panels often have an oily surface and it may thus be advantages to use an adhesive in the adhesive layer of the reinforcement pad that adheres well to an oily surface. Examples of such adhesives have been described above.

The invention is further illustrated with reference to the following examples, without however the intention to limit the invention thereto.

Examples

Abbreviations

**Epoxy Film Adhesive A**

Epoxy film adhesive A was an structural adhesive commercially available from 3M Company (St. Paul, MN/CTSA) as SAF 6045 .

**Epoxy Film Adhesive A**

Epoxy film adhesive B was a structural adhesive commercially available from the 3M Company (St.Paul, MN/USA) as SAF 6068.

**Acrylic Adhesive A**

Acrylic adhesive A is an acrylic transfer tape commercially available from the 3M company (St.Paul, MN/USA) as 9471FL.

**Fibrous web**

The fibrous webs were all made by vertical cross-lapping technology (VCL) using 15 den polyethylene terephtalate (PET) staples fibres and 4.4 den bi-component fibres (BICO) being composed of a copolymer polyethylene terephtalate/ polyethylene isophtalate (outer part) and a homopolymer polyethylene terephtalate (inner part) - having an average staple length of 50mm, commercially available by Tangerding,Germany.

For manufacturing the fibrous webs, small batches (100g) of the fibre blend comprising of 80% staple fibres and 20% thermal bond BICO fibres were mixed by hand. These batches were then hand fed into a single cylinder card at a constant rate. The carded web was then cross-lapped and lightly needle punched and then folded in half along its length. This feed web was then used to feed a second single cylinder card, which provided the web used for vertical cross-lapping (VCL). The vertical cross -lapping process was run on a Struto machine (developed in the Czech Republic at the University of Liberec) set up with a web thickness of 15 mm and the thermal bond oven run at 140°C with a double belt feed system. The Struto process uses a bar to force the fibres into a vertical orientation. Such a process pushes the ends of the fibres at the point when the direction is changed out of the loop giving a highly oriented product in the z-direction.

TEST METHODS

**3-Point Bend Test**

A test pad, having a dimension of 152.4 mm x 101.6 mm, was bonded to a first side of a 0.254 mm thick steel panel, having the same dimension as the test pad. This resulted in a contact area between steel panel and test pad of exactly 152.4 mm x 101.6 mm. The test assembly was then cured according to the conditions set out below and thereafter the steel panel/ test pad assembly was placed upon 4 aluminium trestles having a height of 30 mm and a width of 30 mm. The test pad side was hereby positioned on top of the trestles, the steel side

facing upwards. This resulted in a table top like test configuration supported on 4 trestles at right angles to the long axis of the steel panel.

These supports were placed 140mm apart thus leaving a 140mm span between trestles. The test was then commenced by pushing down the central portion of the panel while measuring the force necessary to deflect the steel plate.

The steel plate was pushed down and deflected using a flat MDF probe of end dimensions 37mm x 8mm placed in the centre of the panel with the 37mm length at right angles to the long axis of the panel. The probe was pushed down at constant speed (10mm/minute) and the force required measured in compression using normal tensometry.

Example 1

A 152.4mm x 101.6 mm fibrous web obtained as described previously and having a thickness of 15 mm was stretched thereby reducing the vertical folding of the web. To the stretched web was then applied epoxy film adhesive B with a thickness of 0.4 mm. The epoxy adhesive film layer was kept slightly longer than the stretched non-woven fibrous web. The non-woven fibrous web pad was then folded back into its vertical orientation.

This created numerous ridges of the epoxy film penetrating into the non-woven fibrous web, as the adhesive film was pushed into creases of the non-woven fibrous web. The epoxy film also defined a continuous adhesive surface on one of the major surfaces of the non-woven fibrous web with the opposite major surface being free of adhesive.

For the test assembly preparation of the 3-point bend test one-side ground steel panels (available as RS/14 from Q-Panel Company Express Trading Estate, Farnworth, Bolton, BL49TP,U.K) were used. The panels were 0.254 mm thick and had dimensions of 152.4mm x 101.6 mm. No cleaning was conducted prior to mounting the panels with the previously assembled conformable pad consisting of epoxy film B and a fibrous web, as these panels are typically supplied in oil in order to avoid corrosion.

For the application of the conformable pad, the release liner of epoxy film adhesive B was removed and the conformable pad applied by hand to the above described steel panel.

For curing the test assemblies were placed in a forced air oven and the temperature was raised to 180 °C according to the following programmed profile:

- The oven temperature was ramped up from 23°C in 10 minutes to 180°C
- The oven temperature was then held at 180°C for 30 minutes
- After 30 minutes the oven was turned off, the oven door opened and the sample allowed to remain in the oven until cooled out. After the test assembly removal from the oven the curing cycle of example 1 was seen as completed

Example 2

A close cross hatch pattern of beads of epoxy film A having a diameter of 3mm was applied on the adhesive side of acrylic adhesive A. The beads were applied at 120°C using a 3M Jet -Weld ™ application gun. A 152.mm x 101.6 mm fibrous web obtained as described previously was then applied thereto such that at least part of epoxy adhesive film A penetrated into the non-woven fibrous web.

For the test assembly preparation one-side ground steel panels (available as RS/14 from Q-Panel Company Express Trading Estate, Farnworth , Bolton, BL49TP,U.K) were selected. The panels were 0.254 mm thick and had dimensions of 152.4mm x 101.6 mm. No cleaning was conducted prior to mounting the panels with the previously assembled conformable pad consisting of epoxy film A, acrylic adhesive A and a fibrous web, as these panels are typically supplied in oil in order to avoid corrosion.

For the application of the conformable pad, the release liner of acrylic adhesive A was removed and the conformable pad applied by hand to the above described steel panel. For curing the test assemblies were placed in a forced air oven and the temperature was raised to 180 °C according to the following programmed profile:

- The oven temperature was ramped up from 23°C in 10 minutes to 180°C
- The oven temperature was then held at 180°C for 30 minutes
- After 30 minutes the oven was turned off, the oven door opened and the sample allowed to remain in the oven until cooled out. After the test assembly removal from the oven the curing cycle of example 2 was seen as completed

**Test Results**

The test assemblies prepared in examples 1 and 2 were subjected to a 3-point bend test. The results thereof are listed in below table 1.

Table 1

| Deflection (mm) | Example 1 | Example 2 |
|---|---|---|
| 0 | 0 | 0 |
| 1 | 5 | 8 |
| 2 | 9 | 13.5 |
| 3 | 12.5 | 18.5 |
| 4 | 18 | 22 |

(continued)

| Deflection (mm) | Example 1 | Example 2 |
|---|---|---|
| 5 | 23.5 | 26.2 |
| 6 | 29 | 31 |
| 7 | 31.5 | 35.5 |
| 8 | 34.2 | 38 |
| 9 | 37 | 43 |
| 10 | 40 | 47 |

## Claims

1. Reinforcement pad comprising a non-woven fibrous layer having a thickness of at least 3 mm and having opposite major surfaces, one of said major sides comprising an adhesive layer, wherein said non-woven fibrous layer comprises a cross-linkable composition.

2. Reinforcement pad according to claim 1 wherein part but not all of said adhesive layer is penetrated by said non-woven fibrous layer.

3. Reinforcement pad according to claim 1 wherein the curable composition is contained along only part of the thickness of the non-woven fibrous layer.

4. Reinforcement pad according to claim 1 wherein the curable composition is contained along the whole thickness of the non-woven fibrous layer.

5. Reinforcement pad according to claim 1 wherein the non-woven fibrous layer comprises a corrugated non-woven fibrous web.

6. Reinforcement pad according to any of the previous claims wherein the adhesive layer comprises a pressure sensitive adhesive or an activatable adhesive or a combination thereof.

7. Reinforcement pad according to any of the previous claims wherein said adhesive layer comprises domains of pressure sensitive adhesive and domains of an activatable adhesive composition.

8. Reinforcement pad according to any of the previous claims wherein said cross-linkable composition comprises an epoxy resin.

9. Reinforcement pad according to any of the previous claims wherein said cross-linkable composition is contained in said non-woven fibrous layer in an amount of at least 5% by weight based on the total weight of fibers of said non-woven fibrous layer.

10. Method of reinforcing a substrate, comprising adhering to said substrate a reinforcement pad as defined in any of the previous claims and cross-linking said cross-linkable composition.

11. Method according to claim 9 wherein said substrate comprises a component of a motor vehicle.

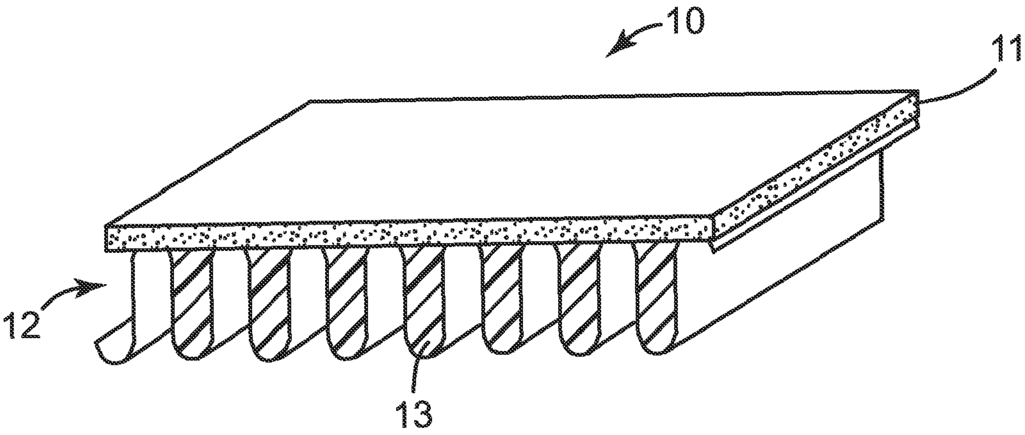


FIG. 1

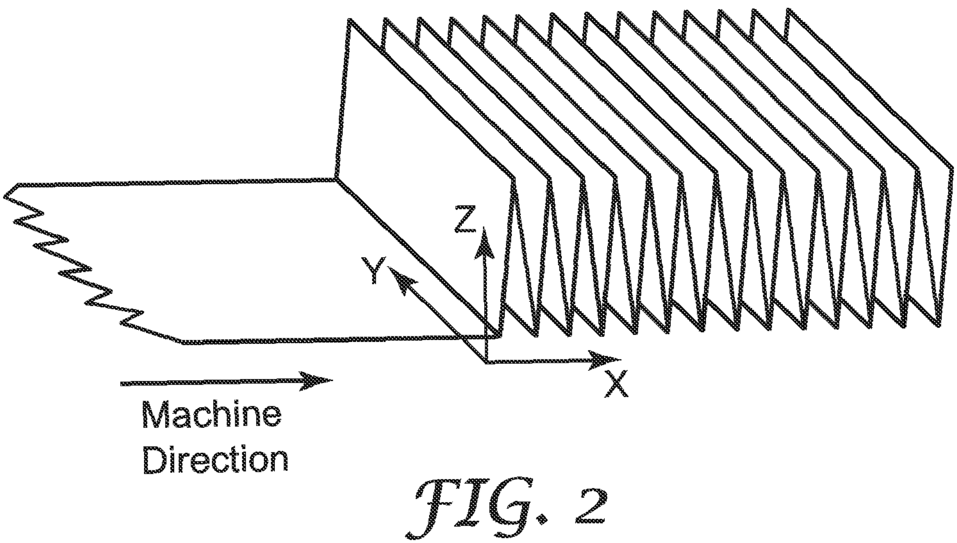


FIG. 2

European Patent Office

# EUROPEAN SEARCH REPORT

Application Number
EP 05 10 2617

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 2003/118785 A1 (ANEJA ARUN PAL) 26 June 2003 (2003-06-26) * claim 1; figures 4A,4B,4C,4D * | 5 | C09J7/02<br>B32B3/28<br>B60R21/00 |
| X | US 5 151 327 A (NISHIYAMA ET AL) 29 September 1992 (1992-09-29) * claims 1,2,7,9-13; figure 1b; examples 1,5,6 * | 1-4,6-11 | |
| A | | 5 | |
| X | US 4 444 818 A (TOMINAGA ET AL) 24 April 1984 (1984-04-24) * claims 10,12 * | 1-4,6-11 | |
| A | | 5 | |
| X | US 5 258 089 A (TANAKA ET AL) 2 November 1993 (1993-11-02) * example 1 * | 1-4,6-11 | |
| A | | 5 | |
| X | US 4 368 568 A (WATANABE ET AL) 18 January 1983 (1983-01-18) * example 1 * | 1-4,6-11 | TECHNICAL FIELDS SEARCHED (Int.Cl.7)<br>C09J<br>B32B<br>B21B<br>B60R |
| A | | 5 | |

The present search report has been drawn up for all claims

| Place of search | Date of completion of the search | Examiner |
|---|---|---|
| Munich | 27 July 2005 | olde Scheper, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

3

EPO FORM 1503 03.82 (P04C01)

## ANNEX TO THE EUROPEAN SEARCH REPORT ON EUROPEAN PATENT APPLICATION NO. EP 05 10 2617

This annex lists the patent family members relating to the patent documents cited in the above-mentioned European search report.
The members are as contained in the European Patent Office EDP file on
The European Patent Office is in no way liable for these particulars which are merely given for the purpose of information.

27-07-2005

| Patent document cited in search report | Publication date | Patent family member(s) | Publication date |
|---|---|---|---|
| US 2003118785 A1 | 26-06-2003 | AU 2002363989 A1 | 23-06-2003 |
| | | CA 2463828 A1 | 19-06-2003 |
| | | CN 1571641 A | 26-01-2005 |
| | | EP 1453403 A2 | 08-09-2004 |
| | | JP 2005511913 T | 28-04-2005 |
| | | MX PA04003484 A | 30-07-2004 |
| | | WO 03049581 A2 | 19-06-2003 |
| US 5151327 A | 29-09-1992 | NONE | |
| US 4444818 A | 24-04-1984 | JP 1404787 C | 09-10-1987 |
| | | JP 58132068 A | 06-08-1983 |
| | | JP 62010589 B | 06-03-1987 |
| | | DE 3370778 D1 | 14-05-1987 |
| | | EP 0085415 A2 | 10-08-1983 |
| US 5258089 A | 02-11-1993 | JP 1958504 C | 10-08-1995 |
| | | JP 2045135 A | 15-02-1990 |
| | | JP 6084055 B | 26-10-1994 |
| | | CA 1333627 C | 20-12-1994 |
| | | KR 9711788 B1 | 16-07-1997 |
| US 4368568 A | 18-01-1983 | JP 1263049 C | 16-05-1985 |
| | | JP 56028312 A | 19-03-1981 |
| | | JP 59036133 B | 01-09-1984 |
| | | AU 518775 B2 | 22-10-1981 |
| | | AU 6109480 A | 12-02-1981 |
| | | CA 1157757 A1 | 29-11-1983 |
| | | DE 3029288 A1 | 26-03-1981 |
| | | FI 802390 A ,B, | 11-02-1981 |
| | | FR 2462997 A1 | 20-02-1981 |
| | | GB 2057092 A ,B | 25-03-1981 |
| | | IT 1130501 B | 18-06-1986 |
| | | NO 802380 A ,B, | 11-02-1981 |
| | | SE 453062 B | 11-01-1988 |
| | | SE 8005593 A | 11-02-1981 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4444818 A
- US 4766183 A
- US 4842938 A
- US 4803105 A
- US 4803108 A
- US 4900601 A
- US 49298483 B
- US 5092947 A
- WO 01947493 A
- US 6602581 B
- US 5086088 A
- WO 9220754 A
- US 20020182955 A1
- US 6057382 A
- US 5143785 A
- US 3962184 A
- US 4022755 A
- US 4026913 A
- US 3595900 A
- US 4740584 A
- US 4709008 A
- US 4528366 A
- US 3733349 A
- US 4195132 A
- US 4116946 A
- US 1960176 A
- US 3562223 A
- US 3627780 A
- US 3839358 A
- US 4468497 A
- US 4503211 A
- US 4751138 A
- US 4985340 A
- EP 306161 A
- EP 306162 A
- EP 109581 A
- US 4868288 A
- EP 9806323 W
- US 5709948 A
- US 09070971 B
- US 5494981 A
- US 6506494 B
- EP 1318181 A
- EP 1245656 A
- WO 9513331 A


### Non-patent literature cited in the description


- **LEE ; NEVILLE.** Handbook of Epoxy Resins. Mc-Graw Hill Book Company, 1967
- **P. F. BRUINS.** Epoxy Resin Technology. John Wiley & Sons, 1968
- Epoxy Resins: Chemistry and Technology. Marcel Dekker, Inc, 1988
- **GUNTER OERTEL.** Polyurethane Handbook. Hanser Publishers, 1985
- Encyclopedia of Polymer Science and Engineering. John Wiley & Sons, Inc, 1988, vol. 11, 45-92
- **ALPHONSUS V. POCIUS.** Adhesion and Adhesives Technology: An Introduction. Hanser Publishers, 1997, 185-188
- Handbook of Pressure Sensitive Adhesive Technology. Warwick RI/USA, 1989, 550-556